# EUROPEAN PATENT APPLICATION

(11) **EP 1 728 457 A1**
(43) Date of publication of application: **06.12.2006**
(21) Application number: 05253211.6
(22) Date of filing: 25.05.2005
(51) Int. Cl.: A47J 27/21, A47J 37/08, A47J 31/44

(54) **Electrical appliances**

(71) Applicant: Dagge, Lester, Bitterley Ludlow Shropshire SY8 3HY (GB)
(72) Inventor: Dagge, Lester, Bitterley Ludlow Shropshire SY8 3HY (GB)
(74) Representative: Somervell, Thomas Richard

(57) **Abstract**

An electrical appliance (10; 50) for use on a work surface or the like comprises at least one removable one-piece outer panel (12, 22; 52, 54). The panel is configured to be attachable to and removable from the appliance by a user. The panel has a decorative design or pattern printed thereon. The user is able to change the appearance of the appliance by removal and attachment of a panel or panels.

## Description

The present invention relates to electrical appliances of the type suitable for use on a work-surface, such as a kitchen work-surface. Examples include kettles, toasters and the like.

Modem kitchen appliances incorporate a wide range of designs and surface finishes. These designs may change frequently according to fashion and design trends. For example, whereas electric kettles were at one time universally of a metal construction and of a generally broad-based cylindrical or hemispherical shape, kettles may be now manufactured from plastics and include the so-called jug kettle.

One problem with known kitchen appliances is that when the appliance is being used, the exposed surfaces tend to reach temperatures hot enough to cause burns if touched accidentally. This problem is particularly prevalent in metal appliances.

Another problem is that, especially in the kitchen environment, the exposed surfaces of appliances gather dust and grease. Cleaning these surfaces is a labour intensive task, because electrical safety determines that the appliances should not be immersed in water.

Another problem, particularly with appliances whose outer surfaces are of plastics materials, is that cracks may occur in the materials, especially if the appliance is dropped. For appliances where the electrical components are integrally moulded into the plastics a crack represents a safety hazard as a possible break in electrical insulation.

Changing design trends and fashions mean that consumers desire to replace appliances to acquire a new look or style. For example, whereas plastic jug kettles have taken a large proportion of the kettle market, there remains a demand for more traditional or retro metal finishes, such as stainless steel, chrome and copper. However, the cost of an appliance is such that the consumer is unlikely to afford to replace it as frequently as they would like to keep pace with changing fashions.

It is an aim of the present invention to provide a kitchen appliance to alleviate one or more of the aforementioned problems.

According to a first aspect of the present invention there is provided an electrical appliance for use on a work surface or the like, the appliance comprising at least one removable one-piece outer panel, the panel being configured to be attachable to and removable from the appliance by a user, and of a material having a decorative design or pattern printed thereon, whereby the user is able to change the appearance of the appliance by removal and attachment of a panel or panels

According to a second aspect of the present invention there is provided a one-piece outer panel for an electrical appliance of the type suitable for use on a work surface or the like, the panel being configured to be attachable to and removable from the appliance by a user, and of a material having a decorative design or pattern printed thereon, whereby the user is able to change the appearance of the appliance by removal and attachment of a panel or panels.

It is an advantage that the panel can be removed, so that it can be washed, or replaced with another panel, either to change the appearance or style of the appliance, or to replace a cracked or damaged panel. Alternatively the decorative design can be removed from the panel to allow a new design to be applied to the panel.

Preferably, the securing means is configured to enable a user to remove and reattach the panel without the use of a tool.

More preferably the securing means is integral with the appliance and/or the one-piece panel so as not to require any other component to be removed when the panel is removed.

Preferably, the panel, when secured to the appliance, conceals the electrical and mechanical working components of the appliance. The panel therefore provides an additional level of electrical and mechanical safety by preventing a user from being able to access the working components.

In embodiments of the invention the panel, when secured to the appliance, is spaced apart from the body of the appliance so as to provide an insulating air gap between hot surfaces of the appliance and the panel. It is an advantage that the outer surfaces of the panel remain cool during use, due to the insulating air gap, thereby reducing the risk of skin burns on anyone who accidentally touches the appliance.

The panel may be of any suitable material, for example a plastics material or a metal, to which a decorative design or pattern can be applied.

Embodiments of the invention include panels of a transparent material, or having a window in the panel. An insertable layer may be held behind the panel, the layer having a pattern or illustration applied to it so as to be visible to the user through the transparent panel or window.

It is an advantage that the user can change or adapt the appearance of the appliance according to tastes, style or fashion trends. The user may also personalise the appearance by applying an individual design (such as an illustration or photo image) to the panel.

In embodiments of the invention, the panel is configured to be securable to the appliance so that the outer surface of the panel fits flush with a surface of the body of the appliance. It is an advantage that flush fitting surfaces provide a smooth appearance and do not leave any cracks in which dirt and grease may become trapped.

The securing means may comprise a lip on the panel, which is engageable with a corresponding recess in a body portion of the appliance.

The panel may be further provided with an opening for receiving a location member provided on the body portion of the appliance, the location member engaging the panel by insertion into the opening so as to secure the panel to the appliance. Alternatively, the panel may comprise a location member for insertion into an opening in the body portion.

The panel may be resiliently flexible so as to be removable from the appliance by flexing of the panel to disengage the panel from the location member.

Alternatively, or additionally, the location member may be resiliently moveable to allow the panel to be removed by movement of the location member to disengage it from the panel. The location member may be a spring-biased button or a compressible rubber or plastics member, or a "living" hinge member.

The appliance may be a kettle, a toaster, or any other similar type of appliance.

Where the appliance is a kettle, or other appliance having a handle, the handle may be integral with a panel. It is an advantage that the handle is thermally insulated from the kettle by the gap between the panel and the body. It is a further advantage that the shape of the handle has a major impact on the style and appearance of a kettle, so that the user can make a significant change to the appearance of the kettle by changing the handle.

Where the appliance is a kettle having a heating element in its base, the panel may comprise a sound insulating material. Alternatively, a sound insulating material may be provided for insertion between the panel and the base of the kettle.

Where the appliance is a toaster, or other appliance requiring ventilation around a heating element, the air gap between the panel and the body may be arranged to provide the required ventilation.

In embodiments of the invention the decorative design or pattern is a design or pattern formed by: Cubic Printing, or Digital Cubic Printing, or Insert moulding, or Vacuum forming/Pre-Form Printing, or Dye Sublimation Printing, or Vinyl Wrapping, or Post-Formed Printed Metal, or using Printed Decals or Pad printing.

Embodiments of the invention will now be described by way of example with reference to the following drawings.

Figure 1 is a side elevation of a kettle with a removable panel embodying the invention.

Figure 2 is a part cross-section, part rear elevation of the kettle of Figure 1, showing one removable panel secured to the kettle, and another panel removed from the kettle.

Figure 3 is a side elevation of a toaster with a removable panel embodying the invention.

Figure 4 is a part cross-section, part end elevation of the toaster of Figure 3, showing one removable panel secured to the toaster, and another panel removed from the toaster.

Figures 5a to 5c show various alternative means for securing a removable panel to an appliance.

Figures 6a and 6b show removable panels having hinged securing means.

Figure 7 shows a removable panel having a layer sandwiched between the panel and an appliance.

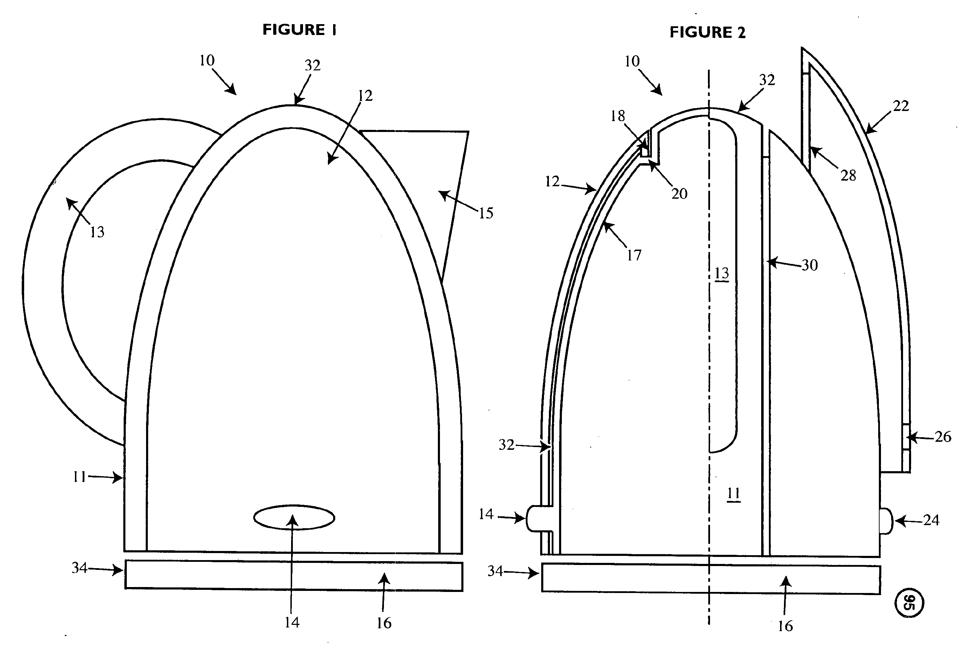

Referring to Figure 1, an electric kettle 10 has a removable side panel 12. The side panel is of one piece and manufactured from a plastics material by a suitable moulding method, or from metal by a pressing operation. The kettle 10 has a body 11, which, in use, sits on a base 16. The body 11 provides a container for water, and is provided inside with a suitable electric heating element (not shown). The kettle 10 has a handle 13 at the rear and a spout 15 at the front for filling and pouring. The kettle 10 is further provided with a location member in the form of a button 14 that protrudes from the body 11 through a corresponding opening in the side panel 12.

Referring to Figure 2, where the kettle of Figure 1 is shown from a rear elevation, with the left hand side showing a cross-section through the body 11 and side panel 12. The body 11 has a side wall 17 in which is formed a recess 20 in the form of a groove running from the base of the kettle 10 at the front, over the body 11 close to its top and down to the base of the kettle 10 at the rear. The side panel 12 has a lip 18 which engages in the recess 20 to provide a close-fitting location of the panel 12 in the recess 20. The side panel 12 is secured to the body 11 by the location of the lip 18 in the recess 20, and by the protrusion of the location button 14 through the corresponding opening in the side panel 12.

The right hand side of Figure 2 shows the rear elevation of the kettle 10, with a second side panel 22 removed. The second side panel 22 is a mirror-image of the side panel 12, and has a lip 28 and an opening 26. The body 11 of the kettle 10 has a second recess 30, mirroring the recess 20 on the left hand side. A second location button 24 mirrors the location button 14.

To secure the second side panel 22 to the kettle, the lip 28 is inserted into the recess 30 by sliding the side panel 22 downwards in the direction of arrow A. The second side panel 22 is sufficiently resiliently flexible to allow it to ride over the location button 24 until the opening 26 is in alignment with the location button 24. To assist in this, the second side panel 22 may be squeezed in the horizontal front-to-rear direction, thereby increasing the lateral distance between the lip 28 and the opening 26. Once the opening 26 is in alignment with the location button 24, the squeezing action is released and the panel flexes into position over the location button 24.

Once the side panel 22 is secured in position the outer surface is flush with an outer surface 32 of the kettle body 11, and with an outer surface 34 of the kettle base 16. Although a gap is shown between the side panel 12 and the base 16 in Figures 1 and 2, these are for clarity only. The flush fitting of the panels prevents dirt and grease from being trapped in cracks between the panel 12 and the body 11 or base 16.

Removal of the side panels 12, 22 from the kettle can be achieved by a reversal of this process. By squeezing the second side panel 22 so that the opening 26 can ride up over the location button 24, the second side panel 22 is removed by sliding it upwards until the lip 28 is clear of the recess 30.

The working electrical/ mechanical components of the kettle 10 include at least a heating element and a switch. These are not shown because they are concealed in the body 11. The side panels 12, 22 provide further concealment and protect the user from access to these components.

In an alternative arrangement, the location button 24 is resiliently moveable so that it can be pressed back into the body of the kettle to allow the panel 22 to ride over it. In one embodiment the button 24 is spaced form the body 11 by a spring. In another embodiment the button 24 is of a resiliently deformable rubber or plastics material so that it can be compressed to allow the panel 22 to ride over it.

The lip 20 of the side panel 12 shown in Figure 2, has a depth relative to the depth of the recess 20 that provides a small air gap 32 between the side panel 12 and the side wall 17 of the body 11. This air gap 32 provides thermal insulation, so that the outer panel remains cool when the kettle is used to boil water. The result is less environmental heat loss and protection of the user from burns received by accidentally touching the hot surfaces of the kettle.

In an alternative embodiment (not shown) the handle 13 of the kettle is attached to a removable panel. When secured to the kettle 10, the removable panel has an air gap (similar to the gap 32 between the side panel 12 and body wall 17 as shown in Figure 2). This provides thermal insulation for the handle so that it remains cool to the user's touch when the kettle is picked up to pour out boiling water. Furthermore, both ergonomic and style considerations are important in the design of a kettle handle. By attaching the handle to a removable panel, the user can make a substantial change to the kettle's appearance by changing the shape or appearance of the handle.

Another embodiment includes a side panel having a layer of sound-absorbing material, which fills a space between the panel 12 and at least a lower part of the body 11. Especially in modem jug kettles, the heating elements are such that a high level of noise is created when the water is heated. The provision of sound absorbing material helps to reduce the noise emissions.

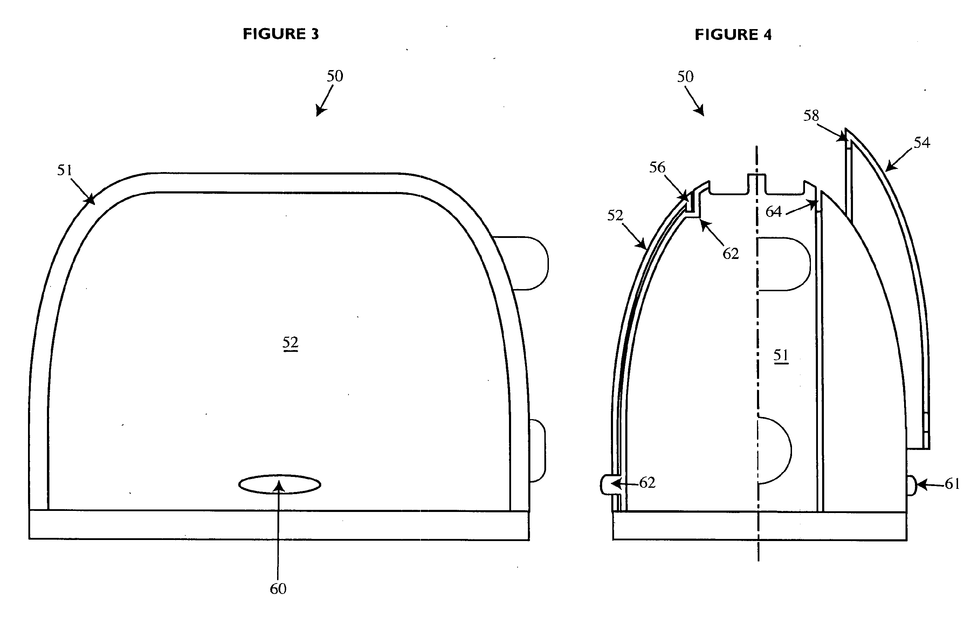

Figures 3 and 4 show a toaster 50 having removable side panels 52, 54 of a similar type to those shown for the kettle 10 of figures 2 and 3. The toaster 50 has a body 51 that houses electrical heating elements and the mechanisms for raising and lowering the bread/toast (not shown). The side panels 52, 54 are provided with lips 56, 58 respectively, and the body 51 is provided with a locating buttons 60, 61, one on each side, as well as recesses 62, 64, one on each side. These provide a means for locating and securing the side panels 52, 54 in the same way as the side panels 12, 22 of the kettle 10 of figures 1 and 2.

The side panels 52, 54 are shown to provide a narrow air gap, similar to that shown for the kettle 10 in figures 1 and 2. However, the air gap for a toaster may be designed to provide ventilation to the toaster heating elements, which is an important consideration in the design of effective toasters.

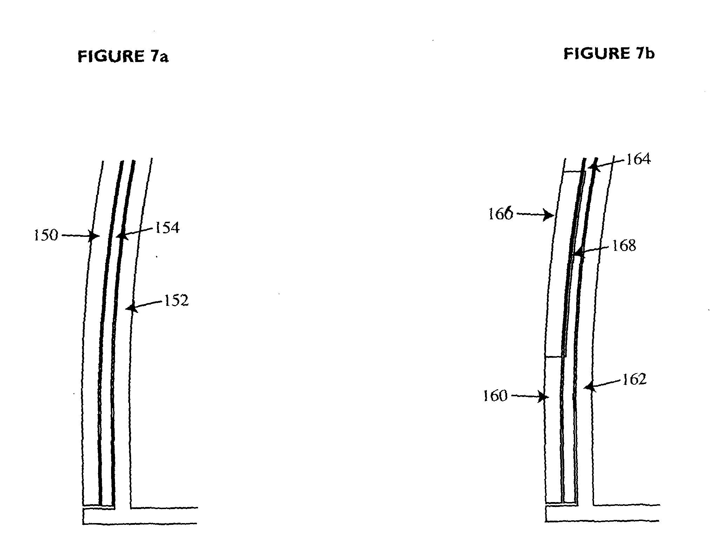

Referring to Figure 7a, a side panel 150 is shown in cross-section. The side panel 150 is removably attached to an appliance body 152. A layer 154 has been inserted between the side panel 150 and the appliance body 152. The layer 154 may be a thermally insulating material and/or a sound insulating material. In one embodiment, the side panel 150 is transparent and the layer 154 has a design imprinted on it such that the design is viewable through the side panel 150.

In Figure 7b a side panel 160 is removably attached to an appliance body 162. The side panel 160 has a window 166. A layer 164, inserted between the side panel 160 and the appliance body 162, has a design 168 imprinted on it so that the design 168 is viewable through the window 166.

In an alternative embodiment to that shown in Figures 7a or 7b, the electrical appliance has a means for illuminating the gap between the removable side panel 150, 160 so as to illuminate the layer 154, 164. The layer 154, 164 may comprise a translucent or semi-translucent coloured film.

In many appliances it is desirable to provide visual information to the user relating to, for example, the level of water in a kettle, or whether or not the appliance is on, or to show digital timer settings. The removable panel may be provided with a transparent window (similar to the window 166 shown in Figure 7b) or lens to faciltate viewing of the visual information. The visual information may include an illuminated display such as a light or an LED or LCD. In one embodiment, the visual information comprises a user-operable device for manipulating a graphical image. The user operable device may be a magnetic scribble film such as Etchasketch ™.

Embodiments of the invention may incorporate any of a variety of means for securing the removable panel, a few examples of which are shown in Figures 5a to 5c. Figure 5a shows a fixing in which a removable panel 70 has an integrally moulded pocket 72 with an opening 74 for receiving a head 76 of a stud 78 that protrudes from an appliance body 80. The head 76 of the stud 78 is slightly larger than the opening 74 so as to provide a snap-fit when the stud 78 is pushed into the pocket 74. In an alternative arrangement the stud 78 is provided on the removable panel 70 and the pocket 74 on the appliance body 80.

In Figure 5b, a panel 90 is shown having a second lip 92 along part of its lower edge 94. The second lip 92 engages in a second recess 96 near the base of the body 95 of the appliance, once the panel 90 has been slid down into its final position. The second lip 92 is further provided with raised teeth or barbs 98, which help to provide a grip in the second recess 96. The teeth may engage into corresponding dimples 99 provided in the walls of the recess 96. In an alternative arrangement the lip is provided with dimples and the teeth are provided on a surface in the recess.

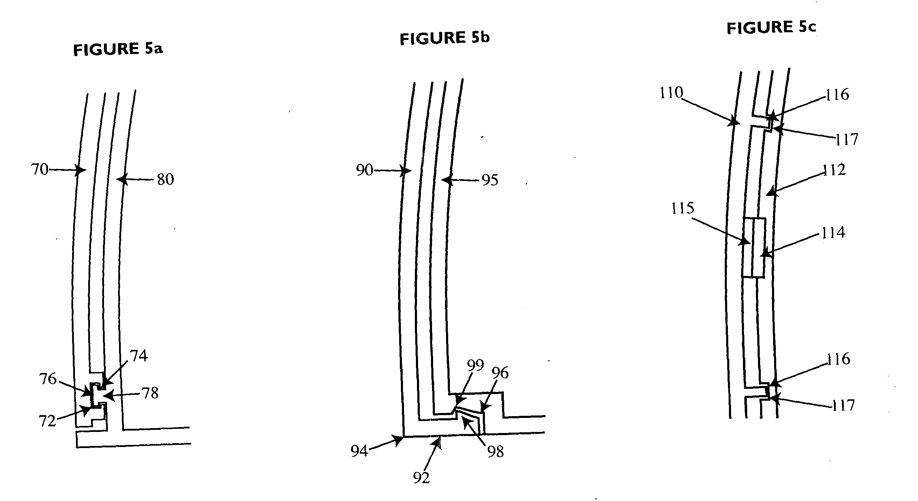

In Figure 5c, a panel 110 is shown which is secured to the body 112 of an appliance by means of a magnet 114. The magnet 114 is fixed to the body 112, and a magnetic metal plate 115 is affixed to an inner surface of the panel, the plate 115 being held to the magnet 114 by its magnetic field. Location members, such as pins 116 are provided for location into corresponding holes 117 in the body 112 to ensure correct positioning of the panel 110 with respect to the body. The panel 110 can be removed from the appliance by pulling it so that the magnetic force holding the plate 115 to the magnet 114 is broken. As an alternative to the use of magnets, a hook and ring type fastening system (e.g. Velcro ™), or pads of removable adhesive may be used.

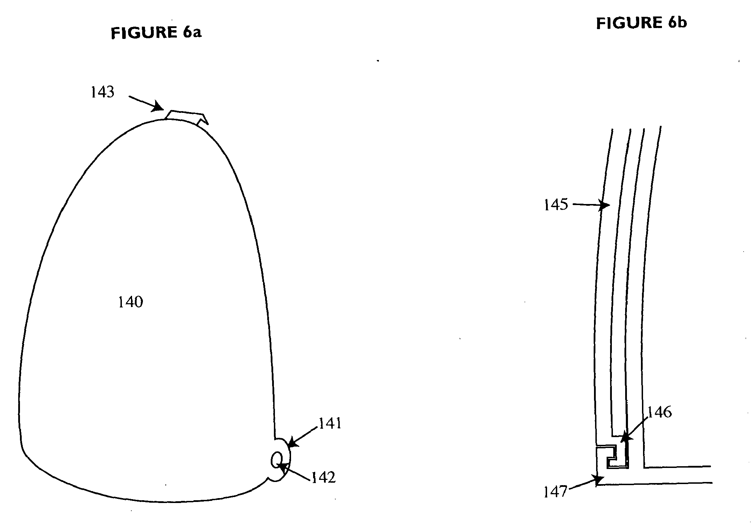

Another arrangement is shown in Figure 6a, where a panel 140 has a removable hinge attachment 141 having an opening 142 for receiving a corresponding lug on the body of the appliance (not shown). The panel 140 is also provided with a clip 143 for engaging to a corresponding location on the appliance body. Disengagement of the clip from the body allows the panel 140 to be swung back, away from the appliance by rotation about the hinge 141. Figure 6b shows an alternative arrangement of hinge 144 shown in cross-section. A removable panel 145 has an S-shaped cross-section lower lip 146 which can be inserted into a correspondingly shaped lip 147 formed on the appliance body so as to form a hinged attachment.

As an alternative, but less preferred, arrangement screws, clips or other fasteners may be provided for securing the panel to the appliance.

In embodiments of the invention the removable panels can be removed from the appliance when desired. The side panels may be cleaned by washing in a sink or dishwasher, without any risk of an electrical hazard. Alternatively, the side panels may be replaced with other side panels to change the surface finish or appearance of the appliance. This provides a simple and effective way of changing the appearance of the appliance as fashions and style trends change, without the need to replace the whole appliance. It is also possible to "personalise" the appearance of the appliance by decorating the side panels in an appropriate way. For example, pictures, photographs, or other individually created designs may be applied to the side panels.

The use of modem printing techniques allows a wide variety of designs to be printed onto the panels. This means that the user can change panels to alter the colour, pattern or appearance of the appliance according to taste or fashion, or if a panel should become spoiled in any way.

One printing technique that could be employed, for example on metal panels is Post Formed Printing, wherein a printed sheet of metal is trimmed and formed to shape. An example where this technique is used is on biscuit tins. However the technique can give rise to problems with draw of metal over deep 3-dimensional surfaces, causing the printed pattern to distort.

An example of an improved technique that has recently been developed is Cubic Printing. This uses an image or pattern pre-printed on a film that floats in bath of water. The panel surface to be printed is lifted up through the water and the image drapes to the shape of the panel. The printed panel is then post-lacquered to protect the printed image. A drawback of this technique is that the films can be very expensive.

Digital Cubic Printing is a similar process to the above, but has the advantage that it is cost effective to print in quantities of 1 unit. This is especially effective in production of unique or "personalised" panels. An image/pattern is formed by an inkjet directed onto a water surface and the panel is lifted up through the surface. Again, the panel is post-lacquered. This technique is not as expensive as cubic printing because it does not require a special film.

Another printing technique is Insert Moulding, where a pre-printed plastic sheet is vacuum formed and then inserted into a mould tool. The panel is then formed by over- moulding. A similar technique is Vacuum forming or Pre-Form Printing, where a printed sheet is vacuum formed to shape. The sheet may be printed by screen printing or inkjet printing. Screen printing has low resolution at 65dpi in comparison to new inkjet technology at 1400dpi.

Another technique is Dye Sublimation Printing, where a film is sent through a dye sublimation printer. The film is then placed into a mould where a heat process fuses the inks to produce a photographic like reproduction.

Vinyl Wrapping is an alternative approach in which a flexible adhesive film is inkjet printed and then applied to a panel using hot air guns to heat and allow flexing of the film so that it takes up the shape of the panel.

Still other techniques include the use of Printed Decal transfers (waterslide transfers), which may be cut and assembled across the shaped surface. The transfers are then dried and cured. Pad printing (Tampo Printing) is a printing process suitable for small printing areas, but to achieve an all over decorative effect, would require assembling a plurality of printed zones.

Side panels manufactured from metal may be used to provide a stainless steel, chrome, copper or other desired metallic finish according to the user's preference. The metal side panels have the additional advantage over conventional metal-bodied appliances because they remain cool during use due to the air gap between the side panel and the appliance body.

As an alternative to printing, a paint finish may be applied to the panel. This could include any of a variety of special paint effects, such as irridescent, pearlised, rubberised soft touch, flocked, suede, graduated, or chromium.

Chemical effect finishes could also be applied to the panel. Examples of such finishing techniques include vacuum metalising, chrome plating and chrome paint effects which replicate the finish of genuine metal components.

As another alternative, the panel could be a moulding of self coloured plastic incorporating special effect additives such as stone effect, luminous, thermochromatic (heat sensitive colour changing) or scented. Alternatively the panel could be formed as a translucent resin-based moulding encapsulating objects that can be seen (in the manner of barbed wire moulded in a toilet seat).

## Claims

1. An electrical appliance (10; 50) for use on a work surface or the like, the appliance comprising at least one removable one-piece outer panel (12, 22; 52, 54), the panel being configured to be attachable to and removable from the appliance by a user, and of a material having a decorative design or pattern printed thereon, whereby the user is able to change the appearance of the appliance by removal and attachment of a panel or panels.

2. An electrical appliance (10; 50) according to claim 8, wherein the decorative design or pattern is removable from the panel to allow a new or alternative design to be applied to the panel.

3. An electrical appliance according to claim 1, wherein the panel (150) is of a transparent material, or wherein a window (166) is provided in the panel (160) and further comprising a layer (154; 164) insertable behind the panel, the insertable layer having a decorative design or pattern applied to it so as to be visible to the user through the transparent panel or window.

4. An electrical appliance according to any preceding claim further comprising securing means (14, 24; 61, 62; Figures 5a, 5b, 5c, 6a, 6b) whereby the one-piece outer panel (12, 22; 52, 54; 70; 90; 110; 140; 145) can be removed from and reattached to the appliance (10; 50) by a user, without the use of a tool.

5. An electrical appliance according to claim 4, wherein the securing means is integral with the appliance and/or with the one-piece outer panel so as not to require any other component to be removed when the panel is removed.

6. An electrical appliance according to any preceding claim, wherein the panel (12, 22; 52, 54) is resiliently flexible so as to be removable from the appliance (10) by flexing of the panel.

7. A one-piece outer panel (12, 22; 52, 54) for an electrical appliance of the type suitable for use on a work surface or the like, the panel being configured to be attachable to and removable from the appliance by a user, and of a material having a decorative design or pattern printed thereon, whereby the user is able to change the appearance of the appliance by removal and attachment of a panel or panels.

8. A one-piece outer panel (12, 22; 52, 54; 150; 160) according to claim 7, wherein the decorative design or pattern is removable from the panel to allow a new or alternative design to be applied to the panel.

9. A one-piece outer panel according to claim 7 or claim 8, wherein the panel is resiliently flexible so as to be removable from the appliance by flexing of the panel.

10. An electrical appliance according to any one of claims 1 to 6, or a one-piece outer panel according to any one of claims 7 to 9, wherein the decorative design or pattern is a design or pattern formed by: Cubic Printing, or Digital Cubic Printing, or Insert moulding, or Vacuum forming/Pre-Form Printing, or Dye Sublimation Printing, or Vinyl Wrapping, or Post-Formed Printed Metal, or using Printed Decals or Pad printing.
